# EUROPÄISCHE PATENTANMELDUNG

(11) **EP 1 073 287 A2**
(43) Veröffentlichungstag der Anmeldung: **31.01.2001**
(21) Anmeldenummer: 00440213.7
(22) Anmeldetag: 17.07.2000
(51) Int. Cl.: H04Q 3/00

(54) **Verfahren zur Werbeunterstützung in Telekommunikationsnetzen**

(30) Priorität: 29.07.1999 DE 19935708
(71) Anmelder: ALCATEL, 75008 Paris (FR)
(72) Erfinder: Hägebarth, Frank, 74366 Kirchheim (DE)
(74) Vertreter: Giebel-Roder, Marion

(57) **Zusammenfassung**

Die Erfindung betrifft ein Verfahren zur Werbeunterstützung in Telekommunikationsnetzen mit IN(lntelligentes Netz)-Server (3). Um eine Werbeunterbrechung im Laufe eines Gespräches zwischen einem Anrufer und einem Angerufenen zu vermeiden, ist vorgesehen, daß durch einen IN(lntelligentes Netz)-Anruf vor dem Verbindungsaufbau des Anrufers (1) mit einem Angerufenen (2) kurzzeitig, beispielsweise 30 Sekunden, Werbeansagen erfolgen.

## Beschreibung

Die Erfindung betrifft ein Verfahren zur Werbeunterstützung in Telekommunikationsnetzen gemäß dem Oberbegriff des Anspruchs 1 sowie einen IN(Intelligentes Netz)-Server zur Durchführung des Verfahrens nach Anspruch 8.

Durch die Liberalisierung der Telekommunikationsmärkte hat sich die Anzahl der Netzbetreiber und Dienstanbieter erheblich erhöht. Die entstandene Konkurrenzsituation führte zu drastischen Preisreduzierungen für die Telefonkunden. Viele Anbieter versuchen sich in erster Linie über den Preis von der Konkurrenz abzuheben und so Marktanteile zu erlangen. Dies hat zur Folge, daß alle Anbieter nach Möglichkeiten der Kostenreduzierung und nach Zusatzeinnahmen suchen. Dieser Trend wird sich in nächster Zeit noch verstärken. Durch das ständige gegenseitige Unterbieten der Preise durch die Konkurrenten ist jedoch eine längerfristige Kundenbindung kaum möglich. Das gilt insbesondere im Festnetz. In den Mobilfunknetzen sind momentan noch längere Vertragslaufzeiten mit den Kunden üblich. Aber auch hier gibt es ein elementares Interesse der Kunden an kürzeren Vertragslaufzeiten. Bekannt ist die Möglichkeit, durch Werbeeinblendungen Zusatzeinnahmen zu erzielen. Dadurch können die Gespräche verbilligt oder sogar kostenfrei geführt werden. Die Akzeptanz von Werbeunterbrechungen durch die Kunden erscheint jedoch zweifelhaft. Neben dem Anrufer wird auch der Angerufene durch Werbung unterbrochen. Viele Anrufer möchten dem Angerufenen solche Unterbrechungen nicht zumuten.

Der Erfindung liegt die Aufgabe zugrunde, durch ein für die Telefonkunden akzeptables Verfahren zur Einbeziehung von Werbung eine Senkung der Telefongebühren zu erzielen. Eine weitere Aufgabe besteht darin, eine längerfristige Bindung von Kunden an einen Netzbetreiber anzustreben.

Die erstgenannte Aufgabe wird durch die kennzeichnenden Merkmale des Anspruchs 1 gelöst. Eine zentrale Netzkomponente des Telekommunikationsnetzes hält eine Anzahl von Werbeansagen bereit. Diese Netzkomponente wird durch einen IN(Intelligentes Netz)-Server realisiert. Durch den IN-Server wird der Anrufer vor dem Verbindungsaufbau zu einem Angerufenen mit einer kurzen Werbeansage in Form von Sprache und/oder Musik verbunden. Erst nach Beendigung der Werbeansage erfolgt der normale Verbindungsaufbau zum gewünschten Gesprächspartner. Das Gespräch wird nicht durch Werbeeinblendungen unterbrochen. Für den Angerufenen handelt es sich somit um ein ganz normales Gespräch. Auf diese Weise ist eine erheblich verbesserte Akzeptanz der Werbung sowohl seitens des Anrufers als auch seitens des Angerufenen zu erwarten. Durch die abgespielte Werbung entstehen Zusatzeinnahmen, die zumindest teilweise an die Telefonkunden weitergegeben werden und so deren Kosten verringern. Werden häufig kurze Gespräche geführt, kann der Telefonkunde seine Gebühren unter Umständen bis zur vollkommenen Kostenfreiheit reduzieren. Da die kurzen Werbeansagen unmittelbar vor Beginn eines Gespräches erfolgen, ist eine hohe Aufmerksamkeit des Kunden gewährleistet. Dies ist besonders für die werbende Industrie von Bedeutung.

Anspruch 2 charakterisiert eine vorteilhafte Möglichkeit, auf welche Weise das Abhören von Werbung dem Anrufer zugute kommen kann. Der IN-Server vergibt bei jedem Anruf eine Gutschrift - auch bei sehr kurzen Gesprächen oder bei Nichterreichbarkeit des Angerufenen.

Die oben genannte zweite Aufgabenstellung wird durch die Merkmale des Anspruchs 3 gelöst. Die freien Gesprächsminuten werden am Ende eines Monats komplett dem Gebührenkonto des Teilnehmers gutgeschrieben und können in der Folgezeit abtelefoniert werden. Beim Abtelefonieren der Freiminuten entstehen automatisch wieder neue Freiminuten, die jedoch erst im folgenden Monat zur Verfügung stehen. Daraus ergibt sich für den Kunden ein Anreiz, erneut über den Netzbetreiber zu telefonierten und somit eine erhöhte Kundenbindung. Der aktuelle Bestand an Freiminuten ist über die monatliche Telefonrechnung und/oder eine vorzugsweise kostenlose Abfrage ermittelbar.

Um bereits im ersten Monat einen Anreiz für den Kunden zu bieten, kann grundsätzlich allen Neukunden eine gewisse Anzahl an Freiminuten zur Verfügung gestellt werden. Diese anfänglichen Freiminuten stellen nur geringe Zusatzkosten für den Netzbetreiber beziehungsweise Dienstanbieter dar, da er ja bereits mit jedem getätigten Telefonat Werbeeinnahmen erzielt.

Gemäß einer in Anspruch 4 gekennzeichneten vorteilhaften Weiterbildung sind Spartencodes für thematisch geordnete Werbeansagen vorgesehen. Der Anrufer wählt die Dienstvorwahl, einen Spartencode und die Zielrufnummer. Spartencode und Zielrufnummer stellen somit Dienstparameter des IN-Servers dar. Für den Spartencode dürfte eine zweistellige Ziffer - 00 bis 99 - ausreichend erscheinen. Damit sind 100 Spartenkanäle möglich, so daß auch ganz spezielle Werbethemen, beispielsweise Katzenbedarf oder Küchenmöbel angeboten werden können. Eine derart gezielte Werbung wird im Vergleich zu Allround-Werbung, beispielsweise Rundfunk- und Fernsehwerbung, erheblich größeres Interesse und entsprechende Aufmerksamkeit wecken. Werbung, die auf die speziellen Bedürfnisse des Konsumenten zugeschnitten ist, wird nicht nur quasi zwangsläufig akzeptiert sondern bewußt und mit Interesse wahrgenommen. Zusätzlich könnten örtliche oder regionale Anbieter nur ihre potentiellen Kunden ansprechen, indem durch den IN-Server eine weitere Selektion anhand der örtliche Vorwahl nummer des Anrufers vorgenommen wird.

Die Merkmale der Ansprüche 5 und 6 ermöglichen eine weitere Effektivierung des Werbekonzeptes, indem nicht nur vor Beginn sondern auch nach Beendigung eines Telefongespräches Werbeansagen durch den Anrufer abgehört werden können. Hat der Angerufene zuerst den Hörer aufgelegt, wird der Anrufer erneut mit der bereits gehörten Werbeansage verbunden. Diese wird ihm im Loop so lange abgespielt, bis er auflegt. So ist er in der Lage, Informationen, beispielsweise Telefonnummern oder Adressen zu notieren. Außerdem kann er durch eine zusätzliche Ansage dazu aufgefordert werden, durch Betätigung einer Taste an seinem Telefon die Verbindung zu einem Call-Center zu veranlassen. Auf diese Weise kann er direkt eine Bestellung aufgeben. Auch wenn der Anrufer zuerst auflegt, kann er anschließend durch erneute Wahl der Dienstvorwahl und gegebenenfalls des Spartencodes noch einmal mit dem IN-Server verbunden werden. Der Server erkennt den Anrufer und verbindet ihn automatisch mit der zuletzt gehörten Werbeansage, so daß der Anrufer wiederum die oben genannten Möglichkeiten, gegebenenfalls bis hin zur Direktbestellung über ein Call-Center hat.

Gemäß Anspruch 7 ist ein Zählmodus für die Ermittlung der Anzahl der abgehörten Werbeansagen vorgesehen, wobei diese Anzahl für jede spezifische Werbeansage separat festgestellt wird. Auf diese Weise ist eine exakte Abrechnung mit den werbenden Firmen möglich.

Anspruch 8 betrifft einen IN(Intelligentes Netz)-Server zur Durchführung des oben geschilderten Verfahrens. Als wichtigste Komponenten beinhaltet der Server Speichermittel zum Speichern der Werbeansagen und Sendemittel zum Verlautbaren dieser Werbeansagen. Der Server fungiert ansonsten nach Art eines Netzvermittlungssystems, wobei die Verbindung des Anrufers zu dem Angerufenen erst nach Ablauf einer voreingestellten Zeitspanne erfolgt. Innerhalb dieser Zeitspanne ist der Anrufer mit den Werbeansagen verbunden. Zusätzlich kann der Server eine Spartencode-Einteilung aufweisen. Dazu muß der Anrufer neben der Dienstvorwahl zur Verbindung mit dem Server noch eine Spartencode-Kennung, beispielsweise eine zweistellige Ziffer, wählen. Er wird dann nicht mit irgendeiner Werbeansage, sondern mit Werbung eines ihn interessierenden kommerziellen Bereiches verbunden.

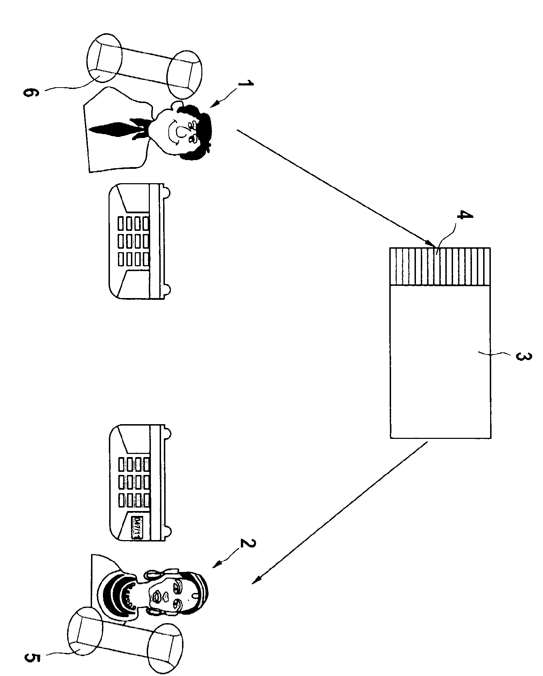

Die Erfindung wird nachfolgend anhand eines schematisch dargestellten Ausführungsbeispiels näher erläutert. Die einzige Figur zeigt einen Anrufer 1 und einen Angerufenen 2, welche über einen IN(Intelligentes Netz)-Server 3 miteinander kommunizieren. Der Anrufer 1 hat dazu eine Dienstvorwahl, einen Spartencode 4 und die Rufnummer des Angerufenen gewählt. Der IN-Server 3 übermittelt dem Anrufer 1 während einer bestimmten Zeitspanne, beispielsweise eine Minute, die entsprechend dem Spartencode 4 von dem Anrufer 1 vorausgewählte spezifische Werbung. Dafür wird dem Anrufer 1 anhand seiner Rufnummer durch den IN-Server oder einer anderen Netzkomponenten eine Gutschrift in Form von gebührenfreien Gesprächsminuten geschenkt. Der Angerufene 2 bemerkt diesen Vorgang nicht. Legt der Angerufene 2 zuerst den Hörer 5 auf, wird der Anrufer 1 noch einmal mit der zuletzt gehörten Werbeansage verbunden. Falls diese letzte Werbeansage für den Anrufer 1 interessant war, kann er auch dann, wenn er zuerst seinen Hörer 6 auflegt, durch erneute Wahl der Dienstvorwahl und des Spartencodes 4 mit dieser Werbeansage noch einmal verbunden werden.

Die werbende Industrie zahlt entsprechend der Anzahl der abgehörten Werbeansagen eine Gebühr an den Netzbetreiber, welcher diese Einnahmen zumindest teilweise in Form von Gutschriften freier Gesprächsminuten an den Kunden weitergibt. Das Abtelefonieren der freien Gesprächsminuten ist erst im nächsten Abrechnungszeitraum, beispielsweise im nächsten Monat, möglich. Auf diese Weise erreicht der Netzbetreiber eine verbesserte Kundenbindung. Der Anrufer 1 kann verbilligt telefonieren und baut durch diese Telefongespräche ein Gutschriftenkonto für den nächsten Abrechnungszeitraum auf, so daß der Anreiz, weiterhin den Netzbetreiber mit dem IN-Server 3 zu bevorzugen, nicht abreißt.

Die Erfindung beschränkt sich nicht auf das vorstehend angegebene Ausführungsbeispiel. Vielmehr ist eine Anzahl von Varianten möglich, welche auch bei grundsätzlich anders gearteter Ausführung von den Merkmalen der Erfindung Gebrauch machen.

## Patentansprüche

1. Verfahren zur Werbeunterstützung in Telekommunikationsnetzten mit IN(Intelligentes Netz)-Server (3), dadurch gekennzeichnet, daß durch einen IN(Intelligentes Netz)-Anruf vor dem Verbindungsaufbau des Anrufers (1) mit einem Angerufenen (2) kurzzeitig, beispielsweise 30 Sekunden, Werbeansagen erfolgen.

2. Verfahren nach Anspruch 1, dadurch gekennzeichnet, daß der IN(Intelligentes Netz)-Server (3) oder eine andere Netzkomponente die Rufnummer des Anrufers (1) ermittelt und eine Gutschrift für die abgehörte Werbung, beispielsweise eine freie Gesprächsminute, vergibt.

3. Verfahren nach Anspruch 2, dadurch gekennzeichnet, daß die Gutschriften über einen Abrechnungszeitraum, beispielsweise einen Monat, aufsummiert und gespeichert werden.

4. Verfahren nach einem der vorangehenden Ansprüche, dadurch gekennzeichnet, daß die Werbeansagen über verschiedene vom Anrufer (1) anwählbare Spartencodes (4), beispielsweise Reisen, Immobilien, Automobile, Computer, Haushalt, Musik, erfolgen.

5. Verfahren nach einem der vorangehenden Ansprüche, dadurch gekennzeichnet, daß der Anrufer (1) erneut mit der bereits gehörten Werbeansage verbunden wird, wenn der Angerufene (2) den Hörer (5) aufgelegt hat.

6. Verfahren nach einem der vorangehenden Ansprüche, dadurch gekennzeichnet, daß der Anrufer (1) durch IN(Intelligentes Netz)-Anruf und gegebenenfalls Wahl des Spartencodes (4) erneut mit der bereits gehörten Werbeansage verbunden wird, wenn der Anrufer (1) den Hörer (6) zur Beendigung einer Verbindung zu einer zuvor gewählten Zielrufnummer eines Angerufenen (2) aufgelegt hat.

7. Verfahren nach einem der vorangehenden Ansprüche, dadurch gekennzeichnet, daß der IN(Intelligentes Netz)-Server (3) die Anzahl der abgehörten Werbeansagen für jedes beworbene Produkt ermittelt.

8. IN(Intelligentes Netz)-Server (3) zur Durchführung des Verfahrens nach einem der vorangehenden Ansprüche, gekennzeichnet durch
• Speichermittel zum Speichern von Werbeansagen und
• Sendemittel zum Verlautbaren der Werbeansagen.
